Europäisches Patentamt

European Patent Office

Office européen des brevets

(11) Publication number: **0 170 132**
**B1**

## (12) EUROPEAN PATENT SPECIFICATION

(45) Date of publication of patent specification: 03.05.89

(51) Int. Cl.⁴: **B 60 K 20/02, G 05 G 9/16**

(21) Application number: **85108690.0**

(22) Date of filing: **11.07.85**

(54) Control device for a motor vehicle change-speed gear unit.

(30) Priority: **27.07.84 IT 5367784 u**

(43) Date of publication of application:
**05.02.86 Bulletin 86/06**

(45) Publication of the grant of the patent:
**03.05.89 Bulletin 89/18**

(84) Designated Contracting States:
**DE FR GB**

(56) References cited:
**EP-A-0 032 883**
**EP-A-0 084 239**
**DE-A-2 500 893**
**FR-A-2 404 545**
**GB-A- 964 188**
**US-A-3 253 481**
**US-A-4 261 220**

(73) Proprietor: **FIAT AUTO S.p.A.**
**Corso Giovanni Agnelli 200**
**I-10135 Torino (IT)**

(72) Inventor: **Di Giusto, Nevio**
**Via Guarini 48**
**I-10078 Venaria (IT)**
Inventor: **Gandiglio, Romolo**
**Via Torino, 33**
**I-14019 Villanova D'Asti (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a control device for a motor vehicle change-speed gear unit of the type in which the movements of the gear lever are transmitted to the selector devices by flexible cables.

The change-speed lever of a motor vehicle is currently connected to the selector mechanisms by way of suitable lever systems of rigid type. The need for operation without excessive play, idle travel and operating inaccuracies means that the gear box and gear lever have of necessity to be disposed a relatively short distance apart, so imposing limits on the overall vehicle design.

To obviate these drawbacks, control devices using flexible cables have been proposed also derived from remote control devices for rear view mirrors, such as that described in the U.S. Patent No. 3.253.481. However, such known control devices frequently use relatively high-cost cables which have to be able to transmit both traction forces and compression forces to the selector means of the change-speed gear. Moreover known control devices for change-speed gear units, also when flexible cables transmissions are used, do not allow the selector mechanism to be placed in such a manner as to improve the comfort of the vehicle passengers.

The object of the present invention is to provide a change-speed gear control device of the flexible cable type which remedies these drawbacks, is of low cost and of very simple construction and assembly, and allows the gear lever to be moved in an extended range.

Said object is attained according to the present invention by a control device for a motor vehicle change-speed gear unit, comprising a gear lever, selector means controllable by said lever, and a cable transmission system connecting the gear lever to the selector means, said cable transmission system comprising a first inflexible rocker element rigid at its centre with the gear lever and coupled to a fixed support by means of a universal joint, a corresponding second inflexible rocker element coupled at its centre to a universal joint of a second support fixable to the gearbox, and three flexible ties provided with sheaths and connecting the rocker elements together at the vertices of a triangle, the ends of the sheaths being retained by the two support elements, characterized in that said fixed support is hinge-mounted on the floor of the vehicle and is provided with a disengageable latch for its fixing to this latter, in such a manner that said gear lever can be lowered into a horizontal position.

The present invention will be more apparent from the non-limiting description of two embodiments thereof given hereinafter with reference to the accompanying drawings, in which:

Figure 1 is a diagrammatic view of a vehicle provided with the control device of the invention;

Figures 2 and 3 are two longitudinal views to an enlarged scale of two different details of the control device of Figure 1 respectively;

Figure 4 shows a possible modification of the detail of the control device illustrated in Figure 3.

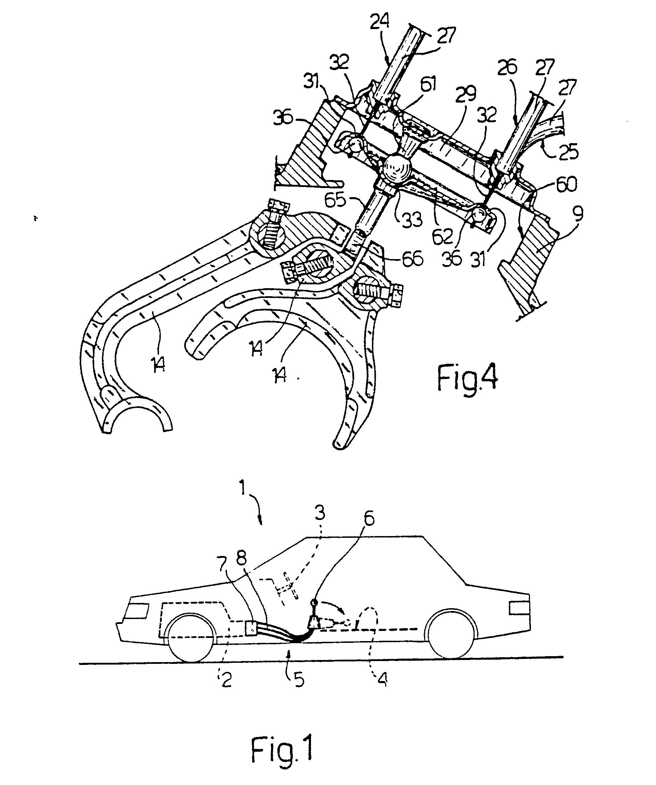

In Figure 1, the reference numeral 1 indicates overall a vehicle comprising a change-speed gear unit 2, a steering wheel 3, a floor 4 and a control device 5 for the gear unit 2 comprising a gear lever 6, selector means 7, and a cable transmission system 8.

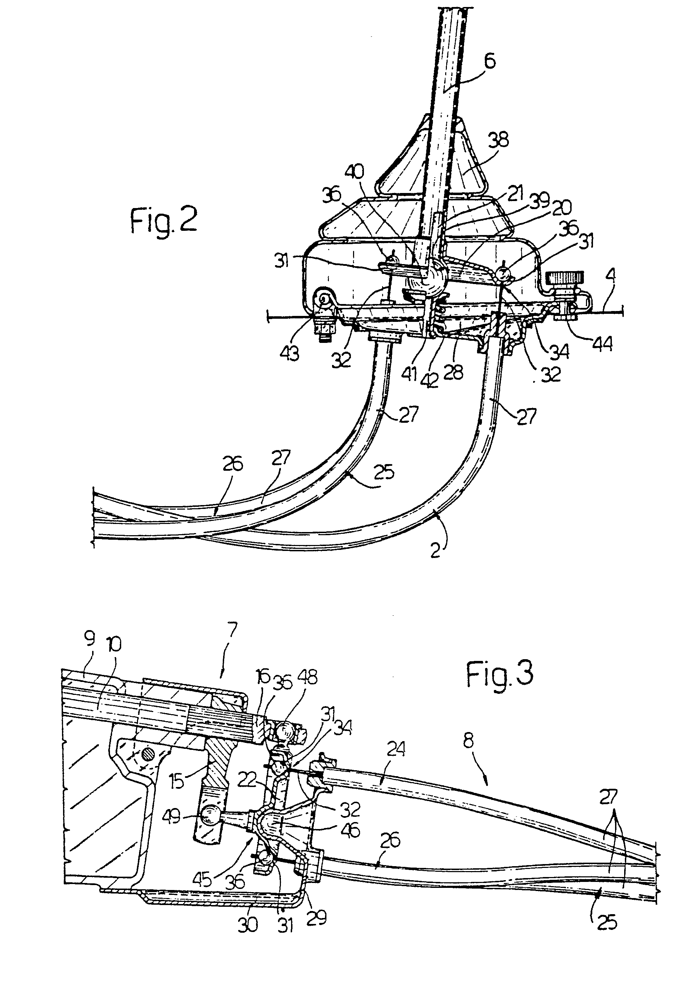

With reference also to Figures 2 and 3, the selector means 7 can be connected to the gearbox 9 of the gear unit 2 (Figure 3), and comprise a shaft 10 disposed idly and mobile axially in the gearbox 9 and arranged to control the translatory movement of respective control forks of known type (not shown) which shift the gears of the gear unit 2, and a fork 15 carried in an angularly rigid manner on the shaft 10 at one end 16 thereof. The end 16 of the shaft 10 and the fork 15 are configured in such a manner as to be engaged by suitable members of the cable transmission system 8, so that on moving the lever 6, the shaft 10 can be made to rotate and/or translate axially, in order to selectively control the translatory movement of each of the forks (not shown) for selecting the various gears of the gear unit 2.

According to the invention, the cable transmission system 8 comprises a first inflexible rocker element 20 rigid with one end 21 of the gear lever 6, a corresponding second inflexible rocker element 22 disposed in a position corresponding with the selector means 7, and three flexible ties 24, 25 and 26 respectively, which connect the rocker elements 20 and 22 together and are provided with sheaths 27 fixed at their opposite ends to two support elements 28 and 29 constituted by rigid plates, preferably of triangular shape, to which the rocker elements 20 and 22 are connected.

The element 28 is arranged for fixing to the floor 4 of the vehicle 1, whereas the element 29 is provided with a bracket 30 for fixing to the gearbox 9.

The rocker elements 20 and 22, which are preferably of triangular shape, also comprise three peripheral connection points 31 situated at the vertices of a triangle for the end 32 of the ties 24, 25, 26.

With particular reference to Figures 2 and 3, the connection points 31 are preferably constituted by indentations formed in the elements 20 and 22, and provided with a through hole 31 in which the ends 32 of the ties 24, 25 and 26 engage by means of stop elements 36 of known type.

The lower end 21 of the lever 6 is housed in a deformable sleeve 38 constructed for example of rubber, and is provided lowerly with a seat 39 for housing a ball 40 acting as a universal joint, it being interposed between said end and a slidable support sleeve 41 disposed centrally in the support 28 and provided externally with a reaction spring 42 arranged to urge this latter towards the end 21.

The described coupling device has the merit of allowing a thrust to be exerted on the element 20 in such a manner that the tension in the cables becomes self-adjusted.

In the embodiment shown in Figure 2, the sleeve 38 and element 28 are mounted on the floor 4 by means of a hinge 43, and are fixed on the opposite side by a disengageable latch 44 so that the lever 6 can be lowered into a horizontal position, shown by dashed lines in Figure 1.

According to the invention, the second rocker element 22 is supported by the support element 29 by means of a joint 45 constituted by two hemispherical indentations 46 provided in the two elements and co-operating with each other.

Permanent engagement between the indentations 46 is ensured by the traction of the ties 24, 25 and 26.

Finally, the mechanical connection between the rocker element 22 and said selector means 7 is made by a pair of spherical-head appendices, 48 and 49 respectively, which are fixed rigidly to the element 22 and disposed at 90° to each other to engage respectively in the projecting end 16 of the shaft 10 and in the fork 15 carried thereby. The device operates in the following intuitive manner. On operating the lever 6, the element 20 can be made to rock relative to the element 28, with consequent movement of the element 22 in the same direction and to the same extent as the element 28, to which it is connected by the ties 24, 25, 26.

On putting either the pair of ties 24 and 26 or the pair of ties 24 and 25 simultaneously under tension, the element 22 can be made to rotate, in opposite directions, on the joint 45 with consequent lateral rocking (Figure 3) of the appendix 49, which causes the fork 15 to rotate together with the shaft 10 which is angularly rigid with it, thus enabling a pair of gears to be selected. When the lever 6 is moved in such a manner that only the tie 24 is put under tension, this latter causes the element 22 to rotate on the joint 45, so that the shaft 10 undergoes outward translatory movement, with consequent engagement of a certain already selected gear in the gear unit 2. In contrast, if the lever 6 is moved in such a manner that the ties 25 and 26 are simultaneously put under tension, the shaft 10 is made to move in the opposite direction.

Figure 4 shows a possible modification of the described control device. Those details which are similar or equal to those already described are indicated for simplicity by the same reference numerals.

In particular, the modification of Figure 4 relates exclusively to the selection means of the described control device. As shown, the gearbox 9 is provided with an aperture 60, and the support element 29 is arranged for mounting directly against it in such a manner as to close the aperture 60.

The corresponding ends of the sheathes 27 are fixed to the element 29, which is provided, on that side facing the interior of the gearbox 9, with a pivot 61 mounted to project perpendicularly and having a spherical end which supports thereon a rocker element 62 identical to the rocker element 22, from which it differs only by the absence of the appendix 48. In contrast to the embodiment of Figure 3, the element 62 directly controls, by means of a rectilinear appendix 65, the operation of the selection forks 14 for the gears of the gear unit 2.

The movements of the element 62 are controlled in a manner analogous to that described for the element 22.

The advantages obtainable by the control device constructed in accordance with the present invention are apparent from the aforegoing description. In this respect, it enables the gears of a change-speed gear unit of known type to be selected and engaged by transmitting the control actions between the gear lever disposed in the vehicle passenger compartment and the selector means disposed in proximity to or inside the gearbox exclusively by way of flexible cables, which operate only under tension. This allows maximum freedom in the relative positioning of the gearbox and gear lever, and ensures efficient and smooth operation of the control device, in that any jamming of the cables is impossible as they operate only under tension. In this respect, it is apparent that because of the symmetry of the system by which the ties are connected to the elements 20 and 22, any movement of these latter produced by one of the cables being pulled against one of the connection points 31 causes the other cables to be pulled in the opposite direction. Finally, if the gear lever is mounted on the vehicle floor in the conventional position, the control device of the invention enables said gear lever to be lowered against the vehicle floor, so that it occupies no space, should this be advantageous.

**Claims**

1. A control device (5) for a motor vehicle change-speed gear unit, comprising a gear lever (6), selector means (7) controllable by said lever, and a cable transmission system (8) connecting the gear lever to the selector means, said cable transmission system (8) comprising a first inflexible rocker element (20) rigid at its centre with the gear lever (6) and coupled to a substantially horizontally fixed support (28) by means of a universal joint, a corresponding second inflexible rocker element (22) coupled at its centre to a universal joint (45) of a second support (29) fixable to the gearbox (9), and three flexible ties (24, 25, 26) provided with sheathes (27) and connecting the rocker elements (20, 22) together at the vertices of a triangle, the ends of the sheathes (27) being retained by the two support elements (28, 29), characterized in that said fixed support is hinge-mounted on the floor (4) of the vehicle and is provided with a disengageable latch (44) for its fixing to this latter, in such a manner that said gear lever can be lowered into a horizontal position.

2. A device (5) as claimed in claim 1, characterized in that the ends (32) of the ties engage respective through holes (34) provided through the first and second rocker element (20, 22) in positions corresponding with the connection points of the ties, and are retained inside the holes (34) by means of respective stop elements (36).

3. A device (5) as claimed in claim 1, characterized in that said support elements (28, 29) are fixable respectively to the floor (4) of the motor vehicle and to the gearbox (9) of said vehicle.

4. A device (5) as claimed in claim 1, characterized in that the support element (28) and the rocker element (20) are kept separated by an elastic element.

5. A device (5) as claimed in claim 1, characterized in that the end of the control lever (6) is surrounded by a deformable sleeve (38), which is rigid with said support element.

6. A device (5) as claimed in claim 1, characterized in that the first rocker element (20) is rigid with the lever (6) and the second rocker element (22) is provided with a pair of appendices (48, 49) connectable to the selector means of the gear unit.

7. A device (5) as claimed in claim 1, characterized in that the support element (28) is defined by a plate (29) mountable in such a manner as to close an aperture (60) of the gearbox (9) and provided with a hemispherical element (61) on which there is mounted the rocker element (62), which is provided with an appendix (65) arranged to cooperate with the control forks (14) of the gear unit.

**Patentansprüche**

1. Kontrollsystem (5) für die Getriebeeinheit eines Motorfahrzeugs, bestehend aus einem Schalthebel (6), einem Auswahlsystem (7), kontrollierbar durch o.g. Schalthebel und ein Kabeltransmissionssystem (8), das den Schalthebel mit dem Auswahlsystem verbindet, besagtes Kabeltransmissionssystem (8), bestehend aus einer ersten unelastischen gebogenen Achse (20), versteift in ihrem Verbindungspunkt mit dem Schalthebel (6) und mit einem praktisch horizontalen fixen Stützelement (28) verbunden, einer entsprechenden zweiten unelastischen gebogenenen Achse (22), verbunden in ihrem Zentrum mit einem allgemeinen Verbindungsstück (45) eines zweiten Stützelements (29), zu befestigen am Getriebegehäuse (9) und drei Bowdenzügen (24, 25, 26), ausgestattet mit Kabelmänteln (27), die die gebogenen Achsen (20, 22) mit den Eckpunkten eines Dreiecks verbinden, die Endpunkte der Kabelmäntel (27), die durch die beiden Stützelemente (28, 29) gehalten werden, sind dadurch gekennzeichnet, daß besagtes befestigtes Stützelement mit einem Scharnier am Boden (4) des Fahrzeugs montiert ist und zu seiner Befestigung an diesem mit einem auskuppelbaren Stützzapfen (44) versehen ist, damit besagter Schaltknüppel in horizontale Position gesenkt werden kann.

2. System (5) nach Anspruch 1, dadurch gekennzeichnet, daß die Endpunkte (32) der Bowdenzüge in entsprechende Öffnungen (34) eingeführt werden, die sich zwischen der ersten und zweiten gebogenen Achse (20, 22) befinden, in Positionen, die den Endpunkten der Bowdenzüge entsprechen und die im Innern der Öffnungen (34) mit den entsprechenden Stopelementen (36) behandelt sind.

3. System (5) nach Anspruch 1, dadurch charakterisiert, daß besagte Stützelemente (28, 29) entsprechend am Boden (4) des Motorfahrzeugs und am Getriebegehäuse (9) des besagten Fahrzeugs befestigt werden können.

4. System (5) nach Anspruch 1, dadurch gekennzeichnet, daß das Stützelement (28) und die gebogene Achse (20) durch ein elastisches Element auseinandergehalten werden.

5. System (5) nach Anspruch 1, dadurch gekennzeichnet, daß der Fuß des Schalthebels (6) mit einem verformbaren Mantel (38) umgeben ist, der fest mit besagtem Stützelement verbunden ist.

6. System (5) nach Anspruch 1, dadurch gekennzeichnet, daß die erste gebogene Achse (20) fest mit dem Schalthebel (6) verbunden ist und die zweite gebogene Achse (22) mit einem Paar Endstücke (48, 49) versehen ist, die mit dem Auswahlsystem der Getriebeeinheit verbunden werden können.

7. System (5) nach Anspruch 1, dadurch gekennzeichnet, daß das Stützelement (28) aus einer Platte besteht (29), die so montiert werden kann, daß eine Öffnung (60) des Getriebegehäuses (9) geschlossen werden kann und versehen mit einem hemisphärischen Element (61), auf das die gebogene Achse (62) montiert ist, die mit einem Endstück (65) versehen ist, in der Art angebracht, daß es mit dem Kontrollgabelgelenk (14) der Getriebeeinheit zusammenarbeitet.

**Revendications**

1. Dispositif de commande (5) pour boîte de vitesse pour véhicules automobiles, comprenant un levier de changement de vitesse (6), des moyens en forme de sélecteur (7) susceptibles d'être commandés par ledit levier et un système de transmission par câbles (8) reliant le levier de changement de vitesse aux moyens en forme de sélecteur, ledit système de transmission par câbles (8) comprenant un premier élément culbuteur non-flexible (20), rigide en son centre avec le levier de changement de vitesse (6) et accouplé à un support (28) fixe, sensiblement horizontal, au moyen d'un joint universel, un second élément culbuteur non-flexible correspondant (22) accouplé en son centre à un joint universel (45) d'un second support (29) susceptible d'être fixe à la boîte de vitesse (9) et trois tirants souples (24, 25, 26) pourvus de gaines (27) et reliant les éléments culbuteurs (20, 22) ensemble aux sommets d'un triangle, les extrémités des gaines (27) étant retenues par les deux éléments de support (28, 29), caractérisé en ce que ledit support fixe est articulé sur le plancher (4) du véhicule et est pourvu d'un verrou débrayable (44) en vue de sa fixation sur ce dernier, de telle manière que ledit levier de changement de vitesse puisse être abaissé en position horizontale.

2. Dispositif (5) selon la revendication 1, caractérisé en ce que les extrémités (32) des tirants s'engagent respectivement dans des trous (34) mélangés dans le premier et le second élément culbuteur (20, 22), dans des positions correspondant aux points de raccordement des tirants et sont retenus dans les trous (34) au moyen d'organes d'arrêt respectifs (36).

3. Dispositif (5) selon la revendication 1, caractérisé en ce que lesdits éléments de support (28, 29) peuvent être fixés, respectivement, au plancher (4) du véhicule automobile et à la boîte de vitesse (9) dudit véhicule.

4. Dispositif (5) selon la revendication 1, caractérisé en ce que l'élément de support (28) et l'élément culbuteur (20) sont maintenus séparés par un élément élastique.

5. Dispositif (5) selon la revendication 1, caractérisé en ce que l'extrémité du levier de commande (6) est entourée d'un manchon déformable (38) qui est rigide avec ledit élément de support.

6. Dispositif (5) selon la revendication 1, caractérisé en ce que le premier élément culbuteur (20) est rigide avec le levier (6) et que le second élément culbuteur (22) est pourvu d'une paire d'appendices (48, 49) pouvant être réunis aux moyens en forme de sélecteur de la boîte de vitesse.

7. Dispositif (5) selon la revendication 1, caractérisé en ce que l'élément de support (28) est défini par une plaque (29) pouvant être montée de manière à fermer une ouverture (60) de la boîte de vitesse (9) et pourvue d'un élément hémisphérique (61) sur lequel est monté l'élément culbuteur (62) qui est pourvu d'un appendice (65) disposé de manière à coopérer avec les fourchettes de commande (14) de la boîte de vitesse.

Fig.4

Fig.1

Fig. 2

Fig. 3